# EUROPEAN PATENT SPECIFICATION

(11) **EP 2 345 941 B1**
(45) Date of publication and mention of the grant of the patent: **28.11.2012**
(21) Application number: 10425405.7
(22) Date of filing: 31.12.2010
(51) Int. Cl.: G05B 19/418, G05B 19/12, B28D 7/00

(54) **System and method for a plant for working natural stones**
System und Verfahren für eine Bearbeitungsanlage von Natursteinen
Procédé et système pour une usine de traitement de pierres naturelles

(30) Priority: 14.01.2010 IT TO20100016
(43) Date of publication of application: 20.07.2011
(73) Proprietor: F.C.S. Solutions S.r.l., 37060 Sona (VR) (IT)
(72) Inventor: Ferlini, Marco, 37060 SONA (VR) (IT)
(74) Representative: Robba, Pierpaolo

(56) References cited:
- FR-A1- 2 578 481
- SERGIO SAPONARA ET AL: "Experimental analysis towards the application of RFID technologies in industrial marble machines", INTELLIGENT DATA ACQUISITION AND ADVANCED COMPUTING SYSTEMS: TECHNOLOGY AND APPLICATIONS, 2009. IDAACS 2009. IEEE INTERNATIONAL WORKSHOP ON, IEEE, PISCATAWAY, NJ, USA, 21 September 2009 (2009-09-21), pages 67-71, XP031572398, ISBN: 978-1-4244-4901-9
- anonymous: "RFID LINE", , 8 January 2009 (2009-01-08), XP002598277, Retrieved from the Internet: URL:http://www.rfidstone.com/pdf/processo. pdf [retrieved on 2010-08-25]

## Description

### Technical field

The present invention generally relates to a system architecture arranged to control and manage working of natural stones in a plant.

The present invention also relates to a method of managing and controlling natural stone working processes.

The present invention also relates to devices specific for the construction of the system and the execution of the method.

More particularly, the present invention relates to a system for and a method of managing working of natural stones within a plant.

In the present description, however, the reference to the working of natural stones or marble is not limited to the working of such materials, but it generally includes also the working of blocks or slabs of natural or artificial material, such as for instance granites, marbles, onyxes, marble- and/or quartz-based conglomerates, and so on.

### Prior art

Working of natural stones, such as for instance blocks of marble and similar materials, generally entails the availability of particularly wide areas as well as of specialised working equipment.

For instance, the surface area of a plant for working marble may amount to 200,000 m², and the workings by respective equipment may include: sawing the blocks in order to obtain slabs or plates of predetermined thicknesses, resin finishing, polishing or flaming of the slabs, and so on.

The most general problems of plants working natural stones (marble) include the ability to know:
- positions of the blocks and slabs inside the plant;
- kind(s) of working performed on the blocks or slabs;
- working parameters associated with the equipment (hours, expendable materials, etc.), so that a preventive maintenance thereof can be provided.

More particularly, since natural stones have peculiar characteristics of size, kind of surface, etc., the most general problems are converted into problems specific for the kinds of materials, which problems cannot be solved by trivial adaptations of known techniques.

Actually, in the specific field of the plants working natural stones, it is necessary to effectively and reliably solve problems related to:
- processes for block and slab recognition;
- processes for block and slab location;
- processes for the definition and organisation, by means of suitable protocols, of the information concerning blocks, slabs and workings.

Generally speaking, the Applicant has noticed that in the field of natural stone working, apart from some attempts of partial automation, (refer e.g. to S.Saponara et al: "Experimental analysis towards the application of RFID technologies in industrial marble machines, IEEE IDAACS 2009 ,21 Septembre 2009, pages 61-71), no solution exists ensuring effectiveness and reliability in the management of natural stones in a plant.

### Description of the invention

It is an object of the present invention to effectively and reliably solve the problems mentioned above of the prior art.

The object is achieved by the system for managing a plant for working natural stones as claimed herein.

The present invention also concerns a method of managing a plant for working natural stones, as well as an information technology (or computer program) product that can be loaded into the memory of at least one computer and comprises software code portions for carrying out the above method, when the product is executed on at least one computer. As used herein, the reference to such an information technology product is meant as being equivalent to the reference to a computer readable medium containing instructions for controlling a computer system or device in order to coordinate the execution of the method according to the invention.

The reference to "at least one computer" is directed to highlight the possibility that the present invention is performed in distributed manner on a plurality of computers.

The claims are integral part of the technical teaching provided herein in respect of the invention.

In accordance with a feature of a preferred embodiment, the system includes at least a working station where it is intended that: a plurality of natural stone blocks are loaded onto a carriage; an RFID tag or label is associated with each block; at least two RFID labels are associated with the carriage on opposite sides thereof, so that, by means of antennas connected to respective terminals and by reading the label associated with the block and one of the two labels associated with the carriage, it is possible to determine the position of each block on the carriage.

In accordance with a further feature of the present invention, it is intended that the labels have a first face covered with a printable material, and a second face on which alternating strips of adhesive are deposited, wherein the first strips include an adhesive arranged to removably hold the labels on a support, and the second strips include an adhesive, for instance a two-component adhesive, arranged to firmly secure the labels to the natural stones.

### Brief Description of the Figures

The above and other features and advantages of the invention will become apparent from the following description of a preferred embodiment, made only by way of non limiting example with reference to the accompanying drawings, in which elements denoted by a same or similar numerical reference correspond to components having the same or similar function and construction, and in which:
- Fig. 1 diagrammatically shows an architecture of a system for plants for working natural stones according to the present invention;
- Fig. 2 shows a general flow chart relevant to the workings performed in the plant shown in Fig. 1;
- Fig. 3 shows a flow chart of a first step of the chart shown in Fig. 2;
- Fig. 4 shows a flow chart of a second step of the chart shown in Fig. 2;
- Fig. 5 shows a preferred embodiment of labels for natural stone blocks or slabs.

### Description of a preferred embodiment

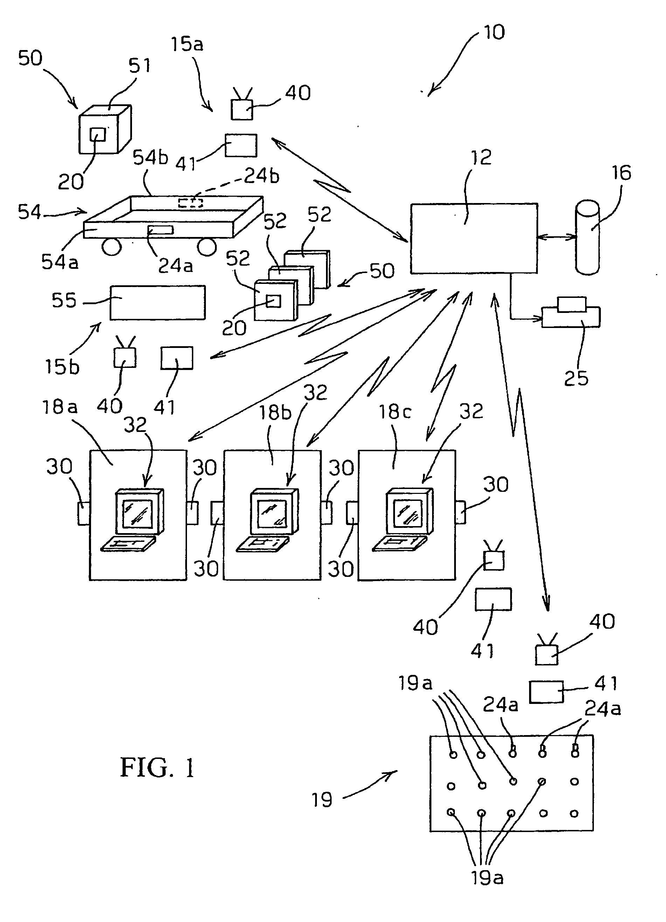

Referring to Fig. 1, a system architecture (system) 10 for a plant working natural stones 50, preferably in the form of blocks 51 or slabs (plates) 52, includes a central processor or server 12 connected to working stations 15a, 15b, 18a, 18b, 18c in the plant through a local area network 14, for instance an Ethernet network or a wireless network of known type.

The stations may include, for instance, block entry stations 15a, block loading and sawing stations 15b, polishing stations 18a, resin-finishing stations 18b, flaming stations 18c etc, and in the present exemplary embodiment reference is made to such stations for sake of simplicity of description.

Server 12 includes an operating system of known type, e.g. Windows 2003, and is arranged to manage one or more company data bases (central data base or DB) 16, for instance relational data bases, by means of management programs of known type, such as for instance the program or system SQL Server of company Microsoft, or system Oracle 10g of company Oracle.

Server 12 is preferably connected to a printer 25, e.g. a serial printer Toshiba TEC BSX5T equipped with an RFID reader SKYTEK M9. In particular, in the preferred embodiment, printer 25 is connected, by means of an interface device of known type, to local area network 14 so as to optimise its use by several stations and is arranged to print and store information on RFID labels.

The server further comprises programs developed when designing system 10 and arranged to exchange information with stations 15a, 15b, 18a, 18b, 18c, as it will be disclosed in detail further on with reference to the general flow chart of the workings performed in the plant.

Generally, the stations can be stationary or movable and, according to the present exemplary embodiment, one or more electronic devices are provided or used at each station. A list of such devices, to which reference will be made below in order to describe the structure and the operation of the different stations, is included here for sake of simplicity of description. In particular, the devices preferably used in system architecture 10 of the present invention are listed here, such devices being anyway referred to again in the description of the different stations.

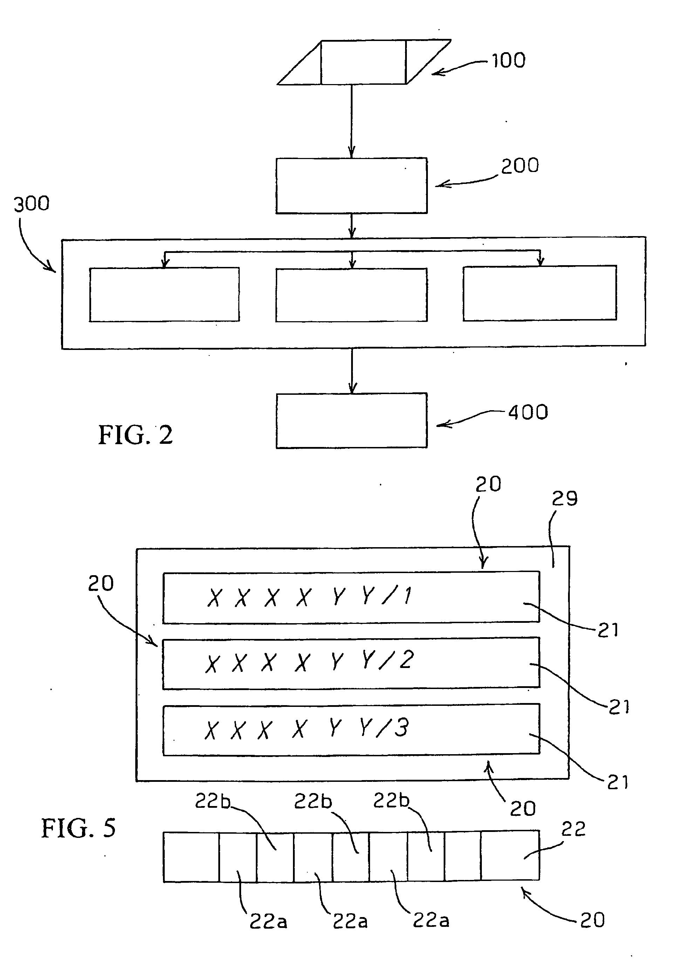

Such devices are:
- RFID (Radio Frequency IDentification) labels or tags 20 (Fig. 5), preferably for blocks or slabs.

The tags are generally associated with blocks 51, marble slabs 52 and preferably with carriages or trolleys 54 or storage stations, and they comprise information items encoded, for instance, with a limited number of bytes and related to the object they are applied to.

According to the present exemplary embodiment, tags 20 are passive tags, operate in the UHF band and store information that can be read and modified from the outside.

The tags are preferably aligned on supports (ribbons) 29, e.g. paper supports, from which they can be removed for being secured for instance to the blocks or the slabs.

The tags are sealed within respective weather-resistant plastic containers, for instance of PE HD, and they have a first face 21 covered with a printable material, for instance paper, and a second face 22 on which, in the preferred embodiment, alternating adhesive strips are deposited, namely:
- first strips 22a including an adhesive arranged to hold the tags associated with support ribbon 29;
- second strips 22b including an adhesive, for instance a two-component adhesive, arranged to secure the tags to the natural stones.

The preferred arrangement of adhesives 22a, 22b in alternating strips allows optimising the function of each kind of adhesive or glue.

An RFID circuit is included in tag 20 and, since it operates in the UHF band, it can be read or written at a distance in the range 10 to 50 cm.

Such a feature seems particularly important to the Applicant, since it allows an effective reading from and writing into the tags without the need of operating in contact (as is the case for bar codes) or at a distance of few centimetres (as is the case of RFIDs operating in HF band).
- RFID (Radio Frequency Identification) labels or tags 24a, 24b (Fig. 1), preferably for carriages or stations.

Tags 24a, 24b for carriages or stations, in the preferred embodiment, are generally associated with carriages 54 or with supports provided in the working stations and, for instance, they are metal tags model OnMetal Tag Ironside of company Confidex.

Such RFID tags are deemed preferable especially when there is the need for applying them to stationary or moving stations, especially if the latter are provided with metal surfaces. According to the present exemplary embodiment, also those tags 24a, 24b are passive tags, operate in the UHF band and store information that can be read and modified from the outside.

As the skilled in the art can readily understand, there is nothing to prevent that, in other embodiments, a single kind of tag is used in the plant, without thereby departing from the scope of the invention as claimed.

### - Antennas 30.

Antennas 30 can be stationary, if they are associated with equipment in the working stations, or movable, and they are arranged to read data stored in the tags secured to blocks 51 or slabs 52 and/or to write data onto the same tags 20.

The antennas are for instance antennas model ISC.ANT.US250/250-EU of company FEIG ELECTRONIC Gmbh and are controlled by readers LRU2000-A-EU UHF Fixed Long Range Reader of company FEIG ELECTRONIC Gmbh.

In the preferred embodiment, the antennas are connected to local processors 32 provided in working stations 15a, 15b, 18a, 18b, 18c through fixed connections (this being the configuration deemed preferable), or to server 12, through network 14.

### - Local processors 32.

Local processors 32 are connected in known manner to antennas 30 and server 12 and are arranged to read, by means of antennas 30, status information relevant to the workings (start of working, working phase, end of working) and to supplement such information with specific information items through suitable masks.

The local processors are for instance personal computers ASEM OT1200 17"/T or possibly "thin-client" terminals, for instance terminals model T5545 of company H.P. The latter are deemed preferable since they are particular suitable for being used in "hostile" environments.

Indeed, "thin-client" terminals, when connecting themselves to the server via local network 14, operate as remote terminals and are capable of mapping again the keyboard, the monitor and the mouse based on the instructions received from the server, so that the whole management logic is resident on the server, with obvious greater advantages from the safety and the resource management standpoint.

### - Hand-held devices 40 with cradles 41.

Hand-held devices (palmtops) 40 are configured for being used by the workers concerned with the management of blocks 51 and slabs 52, and they include antennas arranged to read/write information or codes from/onto tags 20.

Cradles 41 are connected to network 14 and are configured for being used for both electrically recharging, in known manner, palmtops 40 and exchanging information with server 12.

In accordance with the preferred embodiment, palmtops 40 are arranged to read/write information from/onto tags 20 and to transfer the information to server 12 when they are placed on their cradles 41.

The preferred configuration ensures that only at the end of the operations of information exchange with tags 20 located on blocks 51 or slabs 52 the information is transmitted to server 12 in order to update database 16.

Advantageously, such a choice also allows ensuring that the palmtops are electrically recharged with a periodicity determined by the operations carried out.

Palmtops 40 and cradles 41 may be for instance palmtops model WorkAbout PRO Colour G2 of company PSION TEKLOGIX.

As it will be described in detail below, the devices described above, along with the software programs developed when designing system 10, allow managing the working in each station in the plant and automatically and reliably keeping company DB 16 updated.

Thus, the flow of the workings performed in a plant for working natural stones 50, the kinds of stations provided and the electronic devices provided in such stations are described hereinafter by way of non limiting examples.

In general terms, it is to be pointed out that the main object of the present invention is to configure all workings and all stations so as to make them automated and free from possible human errors of the workers, so that a sure picture of the natural stones present, of their working stages and of their locations in the plant is available at any moment.

Actually, it is to be kept in mind that workers operating in the plants for working natural stones often are of a culture and provenience that does not guarantee a sure readout of information stored on labels or the like, and hence it is important to solve the problem of providing, for each working and associated station, tools suitable for avoiding any possible error in the overall data necessary for keeping DB 16 updated.

According to the present exemplary embodiment, the flow of the workings in a plant for working natural stones 50 comprises the following procedures:

### - 100 (Fig. 2): Block entry and labelling.

Such a procedure is performed in block entry station 15a and comprises labelling the blocks arriving at the plant with tags 20 onto which one or more of the following information items or codes are stored by means of palmtop 40:
- unique block code;
- measures of the block;
- overall block size (related to the more or less regular block shape);
- working of destination or depot of destination;
- a drawing representing the block and/or particularities thereof (defects, breakages, etc.).

The above information items are automatically stored into DB 16 (Fig. 1), for instance by placing palmtops 40 in respective cradles 41 connected to server 12 through network 14. This eliminates the need for the workers to actuate specific commands for data storage into DB 16.

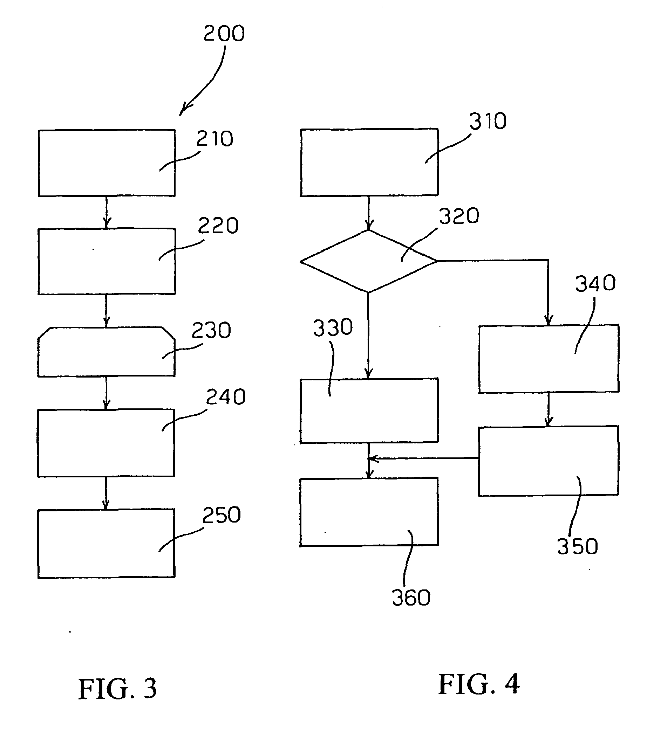

### - 200 (Figs. 2, 3): Block loading onto sawing carriage 54 and block sawing.

Such a procedure 200 is performed in block loading and sawing station 15b and it includes:
- step 210: blocks 51 having been labelled with tags 20 and whose data have been stored in DB 16 are loaded onto carriages 54, preferably made of metal and about 4 - 6 m wide; in the preferred embodiment, the carriages are so sized that they allow loading a plurality of blocks, for instance 5 blocks, and are provided on opposite sides 54a and 54b, respectively, with carriage tags 24a and 24b storing, for instance, one or more of the following information items:
- data relevant to the carriage (code or number, type);
- data or codes relevant to the carriage side (conventionally, Front or Back) on which tag 24a or 24b is located;
- step 220: the carriage code and side are identified by means of carriage tags 24a and 24b; once the carriage has been identified, one of the blocks is selected by means of palmtop 40 and the concerned worker commands the reading of tag 20 of block 51. During this step, for instance, the program stored in the palmtop:
   - illuminates the selected carriage and block;
   - reads the block tag by highlighting the reading for instance by means of a red point.

Of course, such a step is repeated for all blocks loaded onto the carriage or for part of them. Indeed, carriage loading may be performed in different times and needs not to be such as to completely fill the carriage.

By highlighting the different blocks 51 by means of palmtop 40 and by reading every time block tag 20 and carriage tag 24a or 24b, it is possible to detect the carriage content without risks of errors.

Indeed, as the skilled in the art can readily understand, even if the carriage content is read from a side different from the one where the blocks have been associated with the carriage, the different coding of the tags of carriage 54 results in the "inversion" of the block sequence, depending on whether the carriage is read from a first side, for instance, the front, or a second side, for instance the back.

It is therefore evident that, independently of the moment at which the carriage is loaded, the positions of the blocks on the carriages are known at any time thanks to the provision of the carriage tags identifying the carriage sides.

### - step 230: step of actual sawing of blocks 51 into slabs 52.

In such a step, carriage 54 is "loaded" onto a sawing frame, it too provided with a code, so that the frame can be associated with the carriage; at the same time, palmtop 40 is placed onto its cradle 41 in order to transmit the data relevant to the frame, the carriage and the blocks to central database 16.

In such a step, a suitable program, preferably residing in server 12 and named, for instance, "Sawing" program, allows:
- modifying/updating the data concerning the different blocks loaded onto the carriage;
- preparing, in particular, the data necessary for subsequently printing the tags to be associated with the slabs generated during the sawing step; and
- printing, by means of printer 25, the first face 21 of the tags of all blocks in a frame, or of the individual blocks on the frame, and storing the information relevant in particular to the slabs into tags 20 according to predetermined protocols.

- step 240: the blocks are sawn by a sawing machine 55 into slabs and washed, so that the workers can attach labels 20 to slabs 52 resulting from sawing, by removing labels or tags 20 from ribbon 29 and applying a second adhesive component, or "slab adhesive", to the second tag face 22. More particularly, the second component adheres on the tag portion (strips) where the adhesive keeping the tag joined with ribbon 29 used for printing is not provided.
- step 250: the labelled slabs are read and associated with the respective block through a procedure similar to that described in connection with step 220, for instance by:
- illuminating the sawn block on the laptop;
- reading the slab tags and associating the slabs with the block illuminated on the laptop.

Once the reading and the slab association with the respective blocks have been completed, palmtop 40 is placed on a cradle 41 so as to store the code of each labelled slab into DB 16.

During this step, the concerned workers, before placing the laptops on the cradles, also input for each slab, for instance, the thickness, possible size modifications (since seldom the blocks have a perfectly squared shape) and possible indications on whether a specific slab is broken and hence is to be eliminated.

Such a step 250 completes block loading and sawing procedure 200 at block loading and sawing station 15b.

### - 300 (Figs. 2, 4): Possible working procedures subsequent to the sawing procedure.

Such procedures 300 include:
- step 310: individual slabs 52, independently of the blocks they belong to, are loaded on a working line, for instance a line chosen out of polishing stations 18a, resin-finishing stations 18b, flaming stations 18c.

During this step, it is intended that each station has preferably an antenna 30 at both the station entrance and the station exit, the antennas being connected with a respective local processor 32 in the station, so that, when a slab enters the station, tag 20 of slab 52 is read by entrance antenna 30 and the information contained in the tag is transmitted to local processor 32.

In this case, an operator at the local processor, by means of suitable masks displayed on a screen of local processor 32, may input information items supplementing the information read from slab tag 20, start the working and transmit to server 12, for storage into DB 16, information items such as:
- data or codes associated with the slab (such data preferably include information about the last working the slab has undergone);
- data or codes concerning the working in progress;
- data or codes indicating that the slab is being worked, for instance, "slab working begins";
- step 320: server 12, based on the received information, checks whether the working is such as to entail destruction of tag 20.

Actually, as known, workings in polishing and resin-finishing stations 18a, 18b do not entail destruction of tag 20, whereas workings in flaming station 18c entail destruction of tag 20.

As a result of the check, if workings in stations like polishing and resin-finishing stations 18a, 18b are concerned, the server waits for the transmission of the "working completion" information.
- step 330: if the working does not entail destruction of tag 20, station exit antenna 30 transmits to server 12, for instance, a "worked slab" information. This is followed by:
   - step 360: server 12 transmits slab status change instructions to the local processor, which instructions are stored onto tag 20 of slab 52 through exit antenna 30.

In the preferred embodiment, it is intended that tag 20 of each slab 52 contains an information item or code identifying the last working the slab has undergone, and DB 16 contains information or codes relevant to all workings the slab has undergone.
- step 340: if the working entails destruction of tag 20, like in the case exemplified for station 18c, server 12 stores the tag content and generates and prints by means of printer 25 a new tag, while storing the information previously read from the tag destroyed.
- step 350: the new tag 20 is applied onto the worked slab, a new association of the tag with the slab is performed by means of palmtop 40, the "worked slab" information is inputted and the information is transmitted to server 12, for instance by means of cradle 41.

Once step 350 is over, the slab can be marked as leaving the station, in order step 360 is performed;

### - 400 (Fig. 2): Procedure of storage in a depot.

Such a procedure 400 includes:
- step 410: slab displacement by means of conveyor devices in storage areas 19.
   In accordance with the preferred embodiment, storage areas or depots include regularly distributed supporting poles 19a, each equipped with a tag. In the preferred embodiment, the pole tags correspond to the tags secured to the carriages, are denoted here as tags 24a and have stored therein information or codes relevant to the position of supporting pole 19a;
- step 420: positioning of slab 52 in correspondence of a given supporting pole;
- step 420: reading tag 20 of slab 52 and tag 24a of supporting pole 19a by means of the palmtop, associating supporting pole tag 24a with the slab, inputting an information of "stored slab" into the palmtop and transmitting the information to server 12, for instance by means of cradle 41.

Such a step completes the procedure of storage in the depots.

The description has not considered procedures concerning transfer of workings performed on behalf of third parties, selling procedures, discarding procedures or procedures concerning return to the suppliers. Such procedures are however handled as plant exit procedures, by storing the exit and the kind of exit in the server.

The system and the method described allow, generally speaking, an enormous simplification of the plant operations, with sure interventions by both workers operating on the natural stones and administrative workers. Actually, all operations can be automated and made reliable, so as to prevent omissions and errors in data input.

In accordance for instance with possible variants that can be applied to working procedures 300 performed on slabs 52, it is possible, based on the described methodology, to operate devices for automatically photographing the slabs at the end of the working steps, by supplementing for instance step 360 with such an operation and by acting so that the photographic image is transmitted by the antenna at the exit from the working station to the server for storage into the central database in association with the slab.

In this manner, a client can look in advance at the slabs to be bought.

Moreover, advantageously, thanks to the automation of the slab storage processes, it is possible to precisely identify the positions of each slab inside the depots and to keep trace of each displacement of the slabs, independently of the depot and plant size, thereby eliminating any waste of time resulting from the search for slabs already available in the depot and avoiding, for instance, useless workings of blocks in order to process orders for already available slabs that, however, cannot be located, while making the supply of the slabs to the clients extremely fast.

Thanks to further functions programmed on the palmtops and to the use of RFID tags operating in UHF band, the system and the method described allow making an inventory of the depot contents in an extremely simple manner.

Indeed, thanks to the technology employed, it is possible to make an inventory of blocks and slabs without the need of performing a contact reading or a reading at a distance of very few centimetres from the tags.

Moreover, the inventory data can be quickly compared to the data available in the central database so that it can now be expected that inventories, which in the past could demand at least 5 man-days, can be performed, with the system and the method described, in only a few man-hours.

Of course, obvious changes and/or modifications in respect of the shapes, the materials, the components and the connections, as well as in respect of the details of the illustrated construction and the operating manner are possible without departing from the invention as defined in the following claims.

## Claims

1. System for a plant for working natural stones comprising
- a server (12) devised for processing data and managing a central data base;
- terminals (32, 41) distributed over the plant and connected to the server (12), said terminals comprising respective antennas (30, 40);
- RFID labels (20, 24a, 24b) applicable to blocks (51) or plates (52) obtainable from said natural stones (50), said labels comprising information arranged to identify said blocks or plates and being arranged at least to be read by said antennas (30, 40);
- working stations (15a, 15b, 18a, 18b, 18c) comprising at least a respective terminal (32, 41) associated to the working station;
**characterised in that** at least one of said stations is
- a first station (15b) comprising:
- at least two of said RFID labels (24a, 24b) applicable to opposite sides (54a, 54b) of a carriage (54) provided to transport said blocks (51), each of said labels (24a, 24b) having stored therein an identifying code of the side where said label is applied to said carriage (54);
**in that**
- the terminal (41) associated to said first station (15b) is arranged to determine by means of said antennas (40) the position of said blocks on said carriage as a function of the identifying code read from one of said labels; **in that**
- said antennas (40) and said labels (24a, 24b) operate in a UHF band; and **in that**
- said RFID labels (20) comprise alternated strips of two adhesives on either of the two label sides, wherein
- a first adhesive is arranged to hold said labels on a support (29) in a removable way;
- a second adhesive is arranged to allow securing said labels onto said blocks (51) or onto said plates (52).

2. System according to claim 1,
wherein
- said first station (15b) further comprises
- sawing means arranged to saw said blocks (51) and to generate a plurality of plates (52) from each block;
wherein
- said server (12) is configured for printing RFID labels (20) in a number corresponding to the plates obtainable by sawing each block (51);
and wherein
- said terminal (41) is configured for selectively locating, by means of said antennas (40), the plates (52) corresponding to each block so as to allow securing said printed labels (20) onto said plates.

3. System according to any one of claims 1 to 2,
wherein there is provided
- at least a second working station (18a, 18b, 18c), said second station comprising
- at least a first antenna (30) located at the entrance of the second station;
- at least a second antenna (30) located at the exit of the second station;
- at least one terminal (32) connected to the first and the second antenna and configured for transmitting to the server (12) information associated both to the reading of a RFID label (20) associated to a plate entering the second station, and to the reading of the same label exiting from the second station.

4. System according to claim 3, wherein said terminal (32) comprises means for requesting the server (12) to reprint said RFID label (20) in case said label is bound to be destroyed in said second working station.

5. System according to any one of claims 1 to 4,
wherein it is provided that
- RFID labels comprising location information or codes are associable to means arranged to support blocks or plates and located in a storage area,
and wherein
- said terminals are configured to detect said location information from said RFID labels and to associate them to blocks or plates comprising RFID labels arranged to identify said blocks or plates.

6. Method for managing a plant for working natural stones shaped as blocks or plates, comprising at least one station in which steps are provided for:
- associating RFID labels (20) operating in a UHF band to said blocks (51) or plates (52); said step including:
- adapting said RFID labels so that they can be applied on a variety of surfaces by depositing two types of adhesive on said RFID labels;
- associating at least two RFID labels to opposite sides (54a, 54b) of a carriage (54) provided for transporting said blocks (51) or plates (52), each of said labels (24a, 24b) having stored therein an identifying code of the side (54a, 54b) where said label is applied to the carriage (54);
- determining by means of RFID antennas the position of said blocks (51) or plates (52) on said carriage as a function of the identifying code read from one of said labels.

7. Method according to claim 6 wherein said at least one station comprises the further steps of:
- sawing said blocks (51) and generating a plurality of plates (52) from each block;
- printing RFID labels (20) in a number corresponding to the plates obtainable by sawing each block (51);
- selectively locating, by means of said antennas (40), plates (52) corresponding to each block so as to allow securing said printed labels (20) onto said plates by means of one of said two types of adhesive.

8. Computer program product or set of computer program products loadable in the memory of at least one computer and including software code portions arranged to perform, when the product is run on at least one computer, the method according to any one of claims 6 to 7.

9. Computer program product as claimed in claim 8 embodied in a computer readable medium.

## Patentansprüche

1. System für eine Bearbeitungsanlage von Natursteinen, mit
- einem Server (12) zur Datenverarbeitung und zum Management einer zentralen Dateneinheit,
- Terminals (32, 41), die über die Anlage verteilt und mit dem Server (12) verbunden sind und entsprechende Antennen (30, 40) aufweisen,
- RFID-Label (20, 24a, 24b), die für aus diesen Natursteinen (50) gewonnene Blöcke (51) oder Platten (52) geeignet sind und Informationen zur Identifizierung der Blöcke oder Platten enthalten und so angeordnet sind, dass sie mindestens von den Antennen (30, 40) lesbar sind,
- Bearbeitungsstationen (15a, 15b, 18a, 18b, 18c), die mindestens ein entsprechendes Terminal (32, 42) aufweisen, das an die Bearbeitungsstation angeschlossen ist,
**dadurch gekennzeichnet, dass** mindestens eine der Stationen
- eine erste Station (15b) ist, die enthält:
- mindestens zwei dieser RFID-Label (24a, 24b), die an einander gegenüberliegenden Seiten (54a, 54b) eines zum Transport dieser Blöcke (51) vorgesehenen Wagens (54) angebracht werden können, wobei in jedem dieser Label (24a, 24b) ein Identifizierungs-Code der Seite eingespeichert ist, an der das Label am Wagen (54) angebracht ist,
und dass
- das an die erste Station (15b) angeschlossene Terminal (41) so angeordnet ist, dass mittels der Antennen (40) die Lage der Blöcke auf dem Wagen als eine Funktion des Identifizierungs-Codes bestimmbar ist, der von einem der Label lesbar ist, dass
- die Antennen (40) und die Label (24a, 24b) in einem UHF-Band arbeiten, und dass
- die RFID-Label (20) wechselseitig Klebemittelstreifen an jeder der beiden Labelseiten aufweisen, wobei
- ein erstes Klebemittel so angeordnet ist, dass es die Label auf einem Träger (29) lösbar hält;
- ein zweites Klebemittel vorgesehen ist, um die Label auf den Blöcken (51) oder auf den Platten (52) zu sichern.

2. System nach Anspruch 1, wobei
- die erste Station (15b) außerdem aufweist:
- Sägeeinrichtungen zum Sägen der Blöcke (51) und zur Herstellung einer Vielzahl von Platten (52) aus jedem Block,
wobei
- der Server (12) zum Druck von RFID-Labels (20) in einer Anzahl konfiguriert ist, die der beim Sägen jedes Blocks (51) gebildeten Platten entspricht
und wobei
- das Terminal (41) zum selektiven Positionieren mittels der Antennen (40) der jedem Block zugehörigen Platten (52) ausgelegt ist, um die gedruckten Label (20) auf den Platten zu fixieren.

3. System nach einem der Ansprüche 1 bis 2,
wobei
- mindestens eine zweite Arbeitsstation (18a, 18b, 18c) vorgesehen ist, die enthält
- mindestens eine erste Antenne (30), die am Eingang der zweiten Station angeordnet ist,
- mindestens eine zweite Antenne (30), die am Ausgang der zweiten Station angeordnet ist,
- mindestens ein Terminal (32), das mit der ersten und der zweiten Antenne verbunden und so ausgebildet ist, dass es an den Server (12) Informationen überträgt, indem ein mit der Platte verbundenes RFID-Label (20) beim Eintritt in die zweite Station und desselben Labels beim Austritt aus der zweiten Station gelesen wird.

4. System nach Anspruch 3,
wobei das Terminal (32) Mittel aufweist, die den Server (12) anweisen, das RFID-Label (20) erneut zu drucken, falls dieses Label (20) in der zweiten Arbeitsstation zerstört werden muss.

5. System nach einem der Ansprüche 1 bis 4,
wobei vorgesehen ist, dass
- RFID-Label, die Lageinformationen oder Codes enthalten mit Einrichtungen verbindbar sind, die zum Tragen von Blöcken oder Platten vorgesehen sind und in einem Lagerbereich liegen,
und wobei
- diese Terminals so ausgelegt sind, dass sie diese Lageinformationen aus den RFID-Labeln ermitteln und sie Blöcken oder Platten zuordnen, die RFID-Label aufweisen, um diese Blöcke oder Platten zu identifizieren.

6. Verfahren zur Organisation einer Anlage zur Bearbeitung von Natursteinen in Form von Blöcken oder Platten, die mindestens eine Station aufweist, in der folgende Verfahrensschritte vorgesehen sind:
- Anschließen von RFID-Label (20), die in einem UHF-Band arbeiten, an die Blöcke (51) oder Platte (52),
wobei dieser Schritt umfasst:
- Anpassung dieser RFID-Label, so dass sie auf einer Vielfalt von Oberflächen angebracht werden können, indem zwei Arten von Klebemitteln auf diesen RFID-Labeln angebracht werden,
- Verbindung mindestens zweier RFID-Label an einander gegenüberliegenden Seiten (54a, 54b) eines zum Transport der Blöcke (51) oder Platten (52) vorgesehenen Wagens (54), wobei jedes dieser Label (24a, 24b) einen Identifizierungscode der Seite (54a, 54b) gespeichert hat, an der das Label im Wagen (54) angebracht ist,
- Bestimmung der Position der Blöcke (51) oder Platten (52) auf dem Wagen durch RFID-Antennen als Funktion des von einem der Label gelesenen Identifizierungs-Codes.

7. Verfahren nach Anspruch 6,
wobei die mindestens eine Station folgende weitere Verfahrensschritte aufweist:
- Zersägen der Blöcke (51) und Herstellung einer Vielzahl von Platten (52) aus jedem Block,
- Drucken von RFID Labeln (20) in einer Anzahl, die der aus jedem Block durch Sägen zu gewinnenden Platten (51) entspricht,
- selektive Lokalisierung der zu jedem Block gehörenden Platten (52) mittels der Antennen (40), um so die Fixierung der gedruckten Label (20) an den Platten mittels eines der beiden Klebemitteltypen zu ermöglichen.

8. Computerprogrammprodukt oder Satz von Computerprogrammprodukten, die in den Speicher mindestens eines Computers ladbar sind und Software-Code-Abschnitte aufweisen, um bei Anwendung dieser Programme auf mindestens einem Computer das Verfahren nach einem der Ansprüche 6 bis 7 auszuführen.

9. Computerprogrammprodukt nach Anspruch 8, das in einem computerlesbaren Medium enthalten ist.

## Revendications

1. Système destiné à une usine de traitement de pierres naturelles comprenant :
- un serveur (12) affecté au traitement de données et à la gestion d'une base centrale de données ;
- des terminaux (32, 41) répartis sur l'usine et connectés au serveur (12), lesdits terminaux comportant des antennes respectives (30, 40) ;
- des étiquettes RFID (20, 24a, 24b) pouvant être appliquées à des blocs (51) ou à des plaques (52) pouvant être obtenus à partir desdites pierres naturelles (50), lesdites étiquettes comportant une information conçue pour identifier lesdits blocs ou lesdites plaques et étant conçues afin d'être au moins lues par lesdites antennes (30, 40) ;
- des postes de traitement (15a, 15b, 18a, 18b, 18c) comportant au moins un terminal respectif (32, 41) associé au poste de traitement ;
**caractérisé en ce que** au moins l'un desdits postes de traitement est
- un premier poste (15b) comprenant :
- au moins deux desdites étiquettes RFID (24a, 24b) pouvant être appliquées sur les côtés opposés (54a, 54b) d'un chariot (54) prévu pour transporter lesdits blocs (51), chacune desdites étiquettes (24a, 24b) comportant stocké en elle un code d'identification du côté sur lequel ladite étiquette est appliquée sur ledit chariot (54) ;
**en ce que**
- le terminal (41) associé au dit premier poste (15b) est conçu dans le but de déterminer au moyen desdites antennes (40) la position desdits blocs sur ledit chariot en fonction du code d'identification lu à partir de l'une desdites étiquettes ; **en ce que**
- lesdites antennes (40) et lesdites étiquettes (24a, 24b) opèrent dans une bande UHF ; et **en ce que**
- lesdites étiquettes RFID (20) comportent des bandes alternées de deux adhésifs sur l'un ou l'autre des deux côtés de l'étiquette, dans lesquelles
- un premier adhésif est conçu en vue de maintenir lesdites étiquettes sur un support (29) de façon à pouvoir être retirées ;
- un second adhésif est conçu pour permettre de fixer lesdites étiquettes sur lesdits blocs (51) ou sur lesdites plaques (52).

2. Système selon la revendication 1,
dans lequel
- ledit premier poste (15b) comprend, de plus,
- des moyens de sciage conçus pour scier lesdits blocs (51) et pour générer une pluralité de plaques (52) à partir de chaque bloc ;
dans lequel
- ledit serveur (12) est configuré pour imprimer des étiquettes RFID (20) en un nombre correspondant au nombre de plaques pouvant être obtenues en sciant chaque bloc (51) ;
et dans lequel
- ledit terminal (41) est configuré de façon à localiser de façon sélective, au moyen desdites antennes (40), les plaques (52) correspondant à chaque bloc de façon à permettre de fixer lesdites étiquettes imprimées (20) sur lesdites plaques.

3. Système selon l'une quelconque des revendications 1 à 2,
dans lequel il est prévu
- au moins un second poste de traitement (18a, 18b, 18c), ledit second poste comportant :
- au moins une première antenne (30) placée à l'entrée du second poste ;
- au moins une seconde antenne (30) placée au niveau de la sortie du second poste ;
- au moins un terminal (32) connecté à la première et à la seconde antenne et configuré pour transmettre au serveur (12) l'information associée à la fois à la lecture d'une étiquette RFID (20) associée à une plaque entrant dans le second poste, et à la lecture de la même étiquette RFID sortant du second poste.

4. Système selon la revendication 3, dans lequel ledit terminal (32) comporte des moyens pour demander au serveur (12) de réimprimer ladite étiquette RFID (20) dans le cas où ladite étiquette sera amenée à être détruite dans ledit second poste de traitement.

5. Système selon l'une quelconque des revendications 1 à 4,
dans lequel il est prévu que
- des étiquettes RFID comportant une information ou des codes de localisation peuvent être associées à des moyens conçus pour supporter des blocs ou des plaques et placés dans une zone de stockage,
et dans lequel
- lesdits terminaux sont configurés de façon à détecter ladite information de localisation à partir desdites étiquettes RFID et pour les associer aux blocs ou aux plaques comportant des étiquettes RFID conçues pour identifier lesdits blocs ou lesdites plaques.

6. Procédé de gestion d'une usine destinée au traitement de pierres naturelles configurées sous la forme de blocs ou de plaques, comportant au moins un poste dans lequel des étapes sont prévues dans le but de :
- associer des étiquettes RFID (20) opérant dans une bande UHF aux dits blocs (51) ou aux dites plaques (52) ; ladite étape comprenant le fait de :
- adapter lesdites étiquettes RFID de telle sorte qu'elles puissent être appliquées sur une diversité de surfaces en déposant deux types d'adhésifs sur lesdites étiquettes RFID ;
- associer au moins deux étiquettes RFID sur les côtés opposés (54a, 54b) d'un chariot (54) prévu pour transporter lesdits blocs (51) ou lesdites plaques (52), chacune desdites étiquettes (24a, 24b) ayant stocké en elle un code d'identification du côté (54a, 54b) sur lequel ladite étiquette sera appliquée sur le chariot (54) ;
- déterminer au moyen d'antennes RFID la position desdits blocs (51) ou desdites plaques (52) sur ledit chariot en fonction du code d'identification lu à partir de l'une desdites étiquettes.

7. Procédé selon la revendication 6 dans lequel ledit au moins un poste comporte les étapes supplémentaires consistant à :
- scier lesdits blocs (51) et générer une pluralité de plaques (52) à partir de chaque bloc ;
- imprimer des étiquettes RFID (20) selon un nombre correspondant au nombre de plaques pouvant être obtenues en sciant chaque bloc (51) ;
- localiser de façon sélective, au moyen desdites antennes (40), les plaques (52) correspondant à chaque bloc de façon à permettre de fixer lesdites étiquettes imprimées (20) sur lesdites plaques au moyen de l'un des deux dits types d'adhésif.

8. Produit de programme d'ordinateur ou ensemble de produits de programmes d'ordinateur pouvant être chargé(s) dans la mémoire d'au moins un ordinateur et incluant des parties de code logiciel conçues pour exécuter, lorsque le produit est en cours d'opération sur au moins un ordinateur, le procédé selon l'une quelconque des revendications 6 à 7.

9. Produit de programme d'ordinateur selon la revendication 8 réalisé sur un support exploitable par ordinateur.
